# EUROPÄISCHE PATENTSCHRIFT

(11) **EP 2 042 284 B1**
(45) Veröffentlichungstag und Bekanntmachung des Hinweises auf die Patenterteilung: **03.08.2011**
(21) Anmeldenummer: 08163002.2
(22) Anmeldetag: 26.08.2008
(51) Int. Cl.: B29B 7/74, B29B 7/32, B29B 7/82, F16L 21/04, F16L 41/00, B01F 5/06, B01F 5/04

(54) **Vorrichtung zur Erzeugung einer reaktionsfähigen fliessfähigen Mischung und deren Verwendung**
Device for creating a reactionable flowable compound and its use
Dispositif destiné à la production d'un mélange pouvant s'écouler et réagir et son utilisation

(30) Priorität: 27.09.2007 EP 07117425
(43) Veröffentlichungstag der Anmeldung: 01.04.2009
(73) Patentinhaber: Sulzer Chemtech AG, 8404 Winterthur (CH)
(72) Erfinder: Studlek, Joachim, 35614, Asslar (DE); Lutiger, Stefan, 8472, Seuzach (CH); Wanzki, Alexander, 88662, Überlingen (DE); Habibi-Naini, Sasan, 8486, Rikon (CH)
(74) Vertreter: Sulzer Management AG

(56) Entgegenhaltungen:
- EP-A- 1 600 470
- WO-A-01/02456
- CH-A5- 642 564
- DE-A1- 1 504 710
- DE-A1- 3 119 949
- JP-A- 58 036 626
- US-A- 2 749 149
- US-A- 4 874 190
- US-A- 5 069 881
- US-A- 5 397 180
- US-B1- 6 691 932

## Beschreibung

Die Erfindung betrifft eine Vorrichtung zur Erzeugung einer reaktionsfähigen fliessfähigen Mischung.

Eine derartige Vorrichtung dient insbesondere zum Einsatz in einem Verfahren gemäss EP-A- 1 600 470. Das dort beschriebene Verfahren findet seine bevorzugte Anwendung in der Verarbeitung von Silikonkautschuk (oder LSR "liquid silicon rubber"). Silikonkautschuk wird in zwei Komponenten angeliefert. Die beiden Komponenten sind getrennt nicht reaktionsfähig und können bei Raumtemperatur gelagert werden. Erst durch die Mischung der Komponenten entsteht ein reaktionsfähiges Gemisch, dessen Reaktionszeit von der Zusammensetzung der Mischung sowie von Zusatzstoffen, wie beispielsweise Katalysatoren und Inhibitoren, abhängt und in weiten Bereichen einstellbar ist. Auf den Mischblock folgt eine Verarbeitungsvorrichtung, in welcher dann die Reaktion stattfinden soll. In der Verarbeitungsvorrichtung wird ein Formteil in einem kontinuierlichen oder diskontinuierlichen Verfahren erzeugt. Ein derartiges kontinuierliches Verfahren ist beispielsweise ein Extrusionsverfahren, unter den diskontinuierlichen Verfahren sind insbesondere das Druckformen und Spritzgiessverfahren zu nennen. Die Verweilzeit der Mischung in den Formen ist umso grösser, je geringer die Reaktionsgeschwindigkeit ist. Die Verweilzeit entspricht zumindest der Zeitdauer bis zu dem Erreichen eines Umsatzes von 90%, in der Folge als Reaktionszeit bezeichnet. Zur Erhöhung der Produktivität einer Anlage zur Verarbeitung von Silikonkautschuk soll diese Verweilzeit, und daher also die Reaktionszeit, möglichst gering gehalten werden. Eine Verkürzung der Reaktionszeit ist entweder durch Erhöhung der Reaktionstemperaturen oder durch Verwendung von reaktionsfähigeren Komponenten erzielbar, wobei die Reaktion nicht einsetzen darf, bevor die Mischung die Verarbeitungsvorrichtung erreicht hat. Bisher standen dieser Zielsetzung allerdings konstruktive Einschränkungen im Weg, die einen langen Weg der gemischten Komponenten bis zur Verarbeitungsvorrichtung erforderlich machten. In einer vorbekannten Mischvorrichtung treten zudem in den von der Mischung durchströmten Kanälen Totzonen auf, in welchen zumindest ein Teil der Mischung so lange verweilt, dass die chemische Reaktion bereits einsetzt. Kommt es durch die chemische Reaktion zu einer Verfestigung der einzelnen Komponenten, verstopft die Mischvorrichtung oder es gelangen Teile von bereits reagierter Mischung in die nachfolgende Anlage zur Verarbeitung der Mischung. Sogenanntes anvernetztes Material kann in das Produkt gelangen, wodurch die Qualität beeinträchtigt werden kann. Die Folgen reichen von Produktionsunterbrechungen, Produktion von Ausschuss, aufwändigen Reinigungen bis zum Ersatz von beschädigten Maschinenteilen.

Dokument WO-A-01/02456 offenbart einen Mischblock gemäß dem Oberbegriff des Anspruchs 1.

Aufgabe der Erfindung ist es, zur genannten Vorrichtung eine Verbesserung zu schaffen, mittels welcher dieser lange Weg und die Totzonen vermieden werden können. Hierdurch soll die Betriebssicherheit durch die Vermeidung einer verfrühten Reaktion der Komponenten vor dem Eintritt der Mischung in eine nachgelagerte Verarbeitungsvorrichtung, wie beispielsweise die Kavität eines Spritzgiesswerkzeugs, erhöht werden. Es ist eine weitere Aufgabe der Erfindung, die Produktivität durch Verwendung schneller reagierender Mischungen zu erhöhen. Eine weitere Aufgabe der Erfindung besteht darin, die Mischvorrichtung in möglichst wenigen Schritten zu demontieren und zu reinigen. Eine weitere Aufgabe besteht darin, die Mischvorrichtung nach Gebrauch ohne aufwändige Reinigung in einen lagerfähigen Nicht-Betriebszustand überzuführen.

Diese Aufgaben können mit der erfindungsgemässen Vorrichtung gemäß Anspruch 1 gelöst werden.

Die Zusammenführung und die unmittelbar anschliessend erfolgende Mischung der Komponenten findet somit in einem einzigen Teil der Vorrichtung statt, nämlich dem Mischblock, wodurch die Entstehung von Totzonen vermieden wird. Die Verweilzeit der Mischung im Sammelkanal ist daher genau bestimmbar und wird derart eingestellt, dass sie kleiner als die Reaktionszeit der Mischung ist. Unter dem Begriff der Reaktionszeit soll in diesem Zusammenhang auch der nachfolgend beschriebene Ablauf enthalten sein, der die Verweilzeit der Mischung mit bestimmt. Die Mischung kann Komponenten enthalten, welche eine chemische Reaktion verzögern. Diese Komponenten werden auch als Inhibitoren bezeichnet. Durch einen Inhibitor wird die chemische Reaktion verhindert oder zeitlich verschoben. Erst wenn ein grosser Teil der Inhibitoren abgebaut sind, was beispielsweise unter Temperatureinwirkung erfolgt, kann die eigentliche Reaktion der die Mischung bildenden Komponenten starten. Die Geschwindigkeit, mit der dieser Vorgang abläuft, ist ferner eine Funktion der Temperatur, insbesondere der Werkzeugtemperatur. Für Flüssigsilikonkautschuk-Mischungen liegt diese Werkzeugtemperatur im Bereich von 150-220°C. In Bereichen, die wesentlich unter diesem Temperaturbereich liegen, läuft der Abbau der Inhibitoren bei dieser Anwendung sehr langsam ab. Werden daher zumindest zwei Komponenten, welche einen Inhibitor enthalten, bei Temperaturen, die zwischen 20 und 45°C liegen, gemischt, verhalten sich die beiden Komponenten nach deren Vermischung in Bezug auf ihre Verarbeitbarkeit nicht wesentlich anders als vor der Vermischung, weil der Abbau der Inhibitoren und die Reaktion der Komponenten sehr viel langsamer erfolgt. Bei sehr langen Verweilzeiten während laufender Produktionen, nicht zuletzt bedingt durch konstruktiv bedingte Totzonen, kann es dennoch zu einem Start der Reaktion kommen, so dass in diesem Fall die in Zusammenhang mit dem gezielt gesteigert werden kann. Die Zykluszeit, das heisst, die Zeit, welche von der Bereitstellung der Mischung in einer Kavität eines Formwerkzeugs bis zum Abschluss der Reaktion in dieser Kavität und dem Ausstoss eines Formteils vergeht, kann somit verkürzt, werden. Verändert man die Reaktionsfähigkeit der Komponenten gegenüber dem Stand der Technik nicht oder nur in geringem Ausmass, ist eine höhere Betriebssicherheit erzielbar.

Der Sammelkanal weist in einer besonders vorteilhaften Ausgestaltung der erfindungsgemässen Vorrichtung einen im Wesentlichen konstanten Querschnittsverlauf auf, sodass er besonders einfach zu reinigen und kostengünstig herstellbar ist. Die Kanäle haben nach einem besonders bevorzugten Ausführungsbeispiel kreisförmigen Querschnitt, wobei der Durchmesser des Sammelkanals bevorzugt kleiner oder gleich dem Durchmesser jedes der Kanäle ist.

Zumindest einer der ersten und zweiten Kanäle weist eine Verengung auf. Durch diese Verengung wird vermieden, dass im Mündungsbereich eine Rückströmung der durch den ersten Kanal durchfliessenden Komponente in den zweiten Kanal, welcher die einmündende Komponente enthält, erfolgt. Das im Sammelkanal enthaltene Mischmittel ist als statisches Mischelement ausgestaltet, mittels welchem die einzelnen Komponenten schnell und gleichmässig miteinander vermischt werden können. Als besonders vorteilhaft hat sich ein statisches Mischelement vom Typ gemäss CH 642564 erwiesen. Der Mischblock umfasst ein Temperiermittel insbesondere zur Kühlung des Sammelkanals, sodass eine verfrühte Reaktion der Komponenten der Mischung unterbleibt.

Eine Befestigungsvorrichtung für ein Zufuhrmittel ist auf einer Oberfläche des Mischblocks im Bereich zumindest eines der ersten und zweiten Kanäle vorgesehen. Die Befestigungsvorrichtung umfasst zwei lösbare Bügelelemente, zwischen denen ein Flansch des Zufuhrmittels einklemmbar ist. Die Bügelelemente sind mittels Befestigungsmitteln derart auf der Oberfläche des Mischblocks befestigbar, dass eine fluiddichte Verbindung umfasst ein Temperiermittel insbesondere zur Kühlung des Sammelkanals, sodass eine verfrühte Reaktion der Komponenten der Mischung unterbleibt.

Eine Befestigungsvorrichtung für ein Zufuhrmittel ist auf einer Oberfläche des Mischblocks im Bereich zumindest eines der ersten und zweiten Kanäle vorgesehen. Die Befestigungsvorrichtung umfasst zwei lösbare Bügelelemente, zwischen denen ein Flansch des Zufuhrmittels einklemmbar ist. Die Bügelelemente sind mittels Befestigungsmitteln derart auf der Oberfläche des Mischblocks befestigbar, dass eine fluiddichte Verbindung zwischen Zufuhrmittel und Kanal erzeugbar ist. Die Befestigungsmittel umfassen insbesondere ein Paar Schrauben.

Die Verminderung der Totzonen hat auch zur Folge, dass die Spülzeiten für die Vorrichtung erheblich reduziert werden. Nach Gebrauch oder vor Wechsel zu einer Mischung anderer Zusammensetzung müssen die Kanäle mit einer Komponente gespült werden, sodass die andere, reaktive Komponente sicher durch die Spülung entfernt wird. Dabei ist es unproblematisch, wenn nur eine einzige Komponente in den Kanälen des Mischblocks verbleibt, insbesondere wenn diese Komponente selbst nicht reaktiv ist, das heisst, eine zumindest begrenzte chemische Stabilität und damit Lagerfähigkeit aufweist. Wenn somit der Mischblock gelagert werden soll, das heisst, ausser Betrieb gesetzt wird, genügt es, die Kanäle des Mischmittels zu spülen. Hierzu wird die Zuleitung einer Komponente unterbunden, indem das Zufuhrmittel vom Mischblock entfernt wird. Sodann wird die Eintrittsöffnung des nun offenen Kanals mit einem Stopfen blockiert und mit der anderen Komponente gespült. Die Abmessungen des Stopfens sind vorzugsweise so gewählt, dass der Stopfen den Kanalinnenraum von der Eintrittsöffnung bis zur Vereinigung mit dem anderen Kanal ausfüllt, sodass die Totzonen minimiert werden. Vorteilhafterweise dichtet der Stopfen den Kanal ab, sodass die Komponente, welche zur Spülung verwendet wird, nicht in die Umgebung austritt. Sollten sich noch Reste der zweiten Komponente im Kanal befinden, kann auch der Kanal eine Zeit offen gelassen werden, sodass die zur Spülung verwendete Komponente allfällige Reste der zweiten Komponente sicher nach aussen ausschiebt. Dann wird der Stopfen angebracht und der Kanal verschlossen, bis der Mischblock wieder zum Einsatz kommt. Durch die nur geringen Verunreinigungen kann der Spülvorgang somit äusserst zeitsparend durchgeführt werden. Somit ergibt sich ein wesentlicher Vorteil, welcher darin besteht, dass die Umrüstzeit auf Komponenten anderer Zusammensetzung und die Inbetriebnahme nach einer Stillstandszeit nur noch geringe Zeit in Anspruch nehmen. Besonders vorteilhaft ist die Reduktion der Spülzeiten für die Verwendung der Vorrichtung zur Mischung von Farbstoffen. Mittels der erfindungsgemässen Vorrichtung kann einerseits die Spülzeit durch die weitgehende Eliminierung von Totzonen verringert werden und andererseits durch die Verringerung der Montageschritte ein schneller Wechsel zu einem neuen System von Zuleitungen erfolgen, weil zum Auswechseln eines kompletten Schlauchsystems bei Verwendung der Befestigungsvorrichtungen eine wesentlich geringere Anzahl von Montageschritten erforderlich ist. Es genügt, den Stopfen zu lösen und das Zufuhrmittel für die zweite Komponente mittels der nachfolgend beschriebenen Befestigungsvorrichtung am Mischblock anzubringen.

Eine bevorzugte Verwendung der Vorrichtung ist die Herstellung eines Formteils. Ein derartiges Formteil ist in einem Spritzgiessverfahren erhältlich, aber auch als Halbzeug, beispielsweise als Strang in einem kontinuierlichen Verfahren, wie beispielsweise einem Extrusionsverfahren. Insbesondere erfolgt die Verwendung der Vorrichtung in einer Anlage zur Verarbeitung von Silikonkautschuk. Allgemein kann die Vorrichtung nach einem der vorhergehenden Ausführungsbeispiele zur Verarbeitung einer Mischung dienen.

### Nachfolgend wird die Erfindung anhand der Zeichnungen erläutert. Es zeigen:

- Fig. 1: eine Vorrichtung gemäss des Standes der Technik
- Fig. 2: einen Schnitt durch ein erstes Ausführungsbeispiel der erfindungsgemässen Vorrichtung
- Fig. 3: einen Schnitt durch ein zweites Ausführungsbeispiel der erfindungsgemässen Vorrichtung
- Fig. 4a und Fig. 4B: ein erstes Ausführungsbeispiel für eine Befestigungsvorrichtung für ein Zufuhrmittel zur erfindungsgemässen Vorrichtung
- Fig. 5: eine Ansicht eines zweiten Ausführungsbeispiels für eine Befestigungsvorrichtung für ein Zufuhrmittel zur erfindungsgemässen Vorrichtung
- Fig. 6a einen: Schnitt und Fig. 6b eine Draufsicht des zweiten Ausführungsbeispiels für eine Befestigungsvorrichtung für ein Zufuhrmittel zur erfindungsgemässen Vorrichtung
- Fig. 7a und Fig. 7b: ein drittes Ausführungsbeispiel für eine Befestigungsvorrichtung für ein Zufuhrmittel zur erfindungsgemässen Vorrichtung
- Fig. 8: eine schematische Ansicht einer Anlage, in welcher die erfindungsgemässe Vorrichtung Verwendung findet

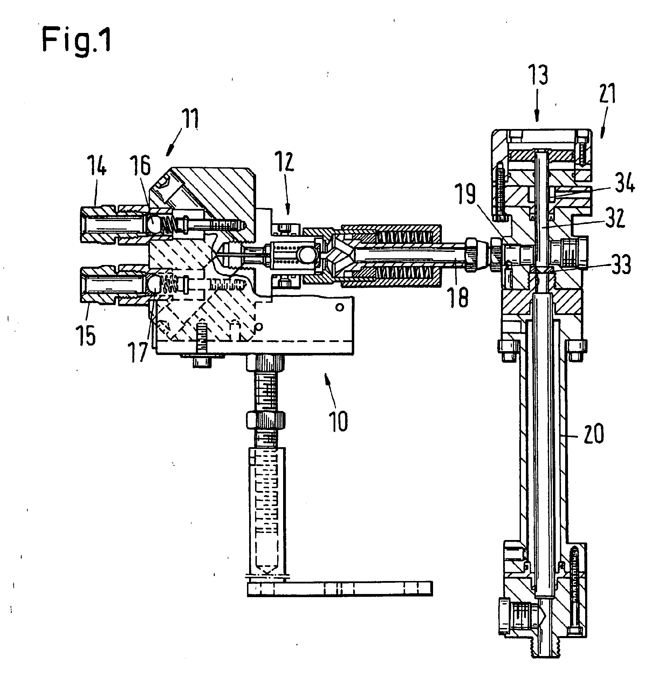

Fig. 1 zeigt eine Vorrichtung 10 zur Förderung einer reaktionsfähigen fliessfähigen Mischung gemäss des Standes der Technik. Die Vorrichtung umfasst eine Zufuhreinheit 11, eine Sammeleinheit 12 und eine Mischeinheit 13. Die Zufuhreinheit enthält eine erste Zufuhrleitung 14 für eine erste Komponente 3 und eine zweite Zufuhrleitung 15 für eine zweite Komponente 5. Die erste Zufuhrleitung enthält ein erstes Rückschlagventil 16 und die zweite Zufuhrleitung enthält ein zweites Rückschlagventil 17. Stromabwärts der Rückschlagventile 16, 17 werden die beiden Komponenten in der Sammeleinheit 12 zusammengeführt. Die beiden Komponenten verlassen die Sammeleinheit 12 durch den Sammelkanal 18. Der Sammelkanal 18 enthält die erste und die zweite Komponente. Handelt es sich bei den Komponenten um hochviskose Fluide, erfolgt kaum eine Durchmischung der Komponenten, während sie den Sammelkanal 18 durchströmen. Der Sammelkanal 18 mündet in die eigentliche Mischeinheit 13, in welcher ein Eintrittskanal 19 vorgesehen ist, welcher in einen um einen Winkel von 90° angeordneten Mischkanal 20 mündet. Die Umlenkung des Eintrittskanals 19 in den Mischkanal 20 ist aus konstruktiven Gründen erforderlich, da eine Absperrvorrichtung 21 vorgesehen ist, welche den Durchfluss der beiden Komponenten unterbinden kann. Die Absperrvorrichtung 21 ist in Fig. 1 als Ventil ausgebildet und umfasst eine fluidbetätigte Nadel 32, welche auf einem zugehörigen Sitzelement 33 aufliegt. Die Nadel 32 ist gleitend in einem Kanal 34 geführt, dessen Durchmesser geringer als der Durchmesser des Eintrittskanals 19 ist. Der Innendurchmesser des Sitzelements 33 ist kleiner als der Durchmesser des Mischkanals stromaufwärts und stromäbwärts desselben. Daher ist die Ausbildung von Totzonen in diesem Bereich unvermeidbar, was zur Folge hat, dass die Komponenten des reaktionsfähigen Gemisches bei genügender Verweilzeit in der Totzone miteinander zu reagieren beginnen.

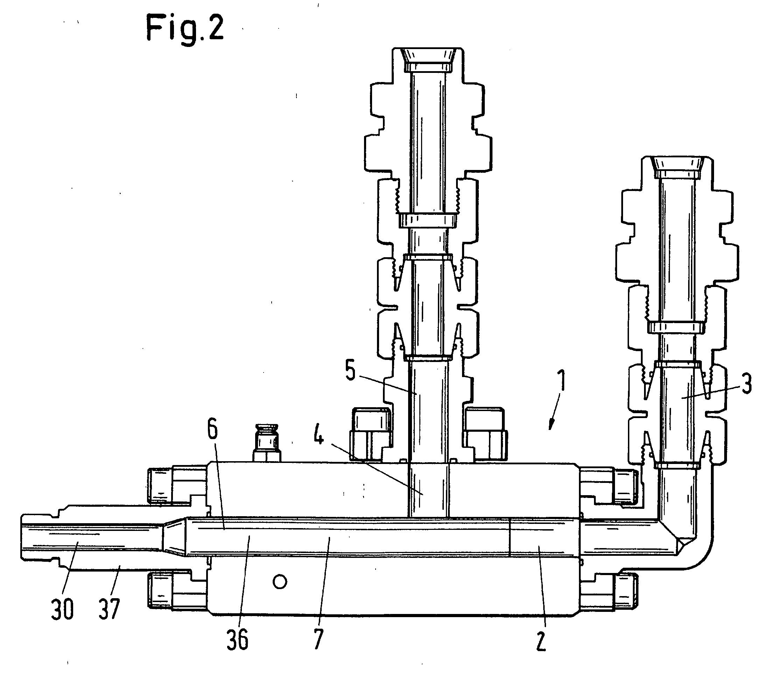

Die erfindungsgemässe Vorrichtung zur Förderung einer reaktionsfähigen fliessfähigen Mischung 6, wie sie in Fig. 2 nach einem ersten Ausführungsbeispiel schematisch dargestellt ist, umfasst einen Mischblock 1, der zumindest einen ersten Kanal 2 für eine erste Komponente 3 der Mischung und einen zweiten Kanal 4 für eine zweite Komponente 5 der Mischung aufweist. Des Weiteren enthält der Mischblock einen Sammelkanal 7 für die Mischung 6, in welchen der erste Kanal 2 und der zweite Kanal 4 einmünden. Die Verweilzeit der Mischung im Sammelkanal 7 ist kleiner als die Reaktionszeit der Komponenten der Mischung gemäss der Ausführungen an früherer Stelle. Der Sammelkanal 7 weist zumindest abschnittsweise kreisförmigen Querschnitt auf, insbesondere einen kreisförmigen Querschnitt mit konstantem Durchmesser. Im Sammelkanal 7 kann ein Mischmittel 36, insbesondere ein statischesmischelement angebracht sein Ein besonders geeignetes statisches Mischelement ist beispielsweise in der CH 642564 offenbart, deren Inhalt in seiner Gesamtheit zum Bestandteil dieser Anmeldung erklärt wird. Ein derartiges Mischelement ist im Sammelkanal angeordnet, der ein rohrartiges Gehäuse für das Mischelement ausbildet. Das statische Mischelement besteht aus sich kreuzenden Stegen, die einen Winkel gegenüber der Achse des Sammelkanals aufweisen. Die Stege des Mischelements sind in mindestens zwei Gruppen angeordnet. Die Stege innerhalb einer jeden Gruppe sind im wesentlichen parallel gerichtet und die Stege der einen Gruppe kreuzen sich mit den Stegen der anderen Gruppe. Besonders bevorzugt beträgt das Verhältnis der maximalen Stegbreite zum Durchmesser des Sammelkanals 0,1 bis 0,167, das Verhältnis des senkrechten Abstandes der Stege einer Gruppe zum Durchmesser des Sammelkanals insbesondere 0,2 bis 0,4 und das Verhältnis der Länge des Mischelements zum Durchmesser des Sammelkanals 0,75 bis 1,5. Die Stege haben stromteilende Wirkung, sodass eine gute Durchmischung schon nach einer Länge von 4 bis 12 Durchmessern des Sammelkanals erzielbar ist, das heisst nach Durchströmung einer Mehrzahl derartiger Mischelemente. Für den Fall, dass zusätzlich Additive wie z.B. Farbstoffe beigemischt werden sollen, kann ein derartiges Mischelement durch seine hohe Mischleistung Viskositätsunterschiede zwischen den Komponenten und den Additiven ausgleichen. Der Sammelkanal 7 mündet in eine Sammelleitung 30, die zu einer in dieser Fig. nicht dargestellten Verarbeitungsvorrichtung führt. Die Sammelleitung 30 ist in einem Übergangselement 37 angeordnet. Das Übergangselement 37 dient der Verbindung von Mischblock 1 mit der Verarbeitungsvorrichtung, die beispielsweise als Extruder oder als Spritzgiessmaschine ausgestaltet ist. In der in Fig. 2 dargestellten Variante ist das Übergangselement mittels Schraubverbindungen am Mischblock angebracht. Die Sammelleitung 30 im Inneren des Übergangselements enthält einen konischen Übergang, welche der Aufnahme eines ersten Endes des Mischelements dient. Das Mischelement wird somit im Sammelkanal 7 und der Sammelleitung 30 durch den konischen Übergang positioniert und in einer zentralen Lage fixiert. Gleichzeitig bietet diese Variante die Möglichkeit, bei Lösung der Schraubverbindung das Übergangselement 37 vom Mischblock 1 zu trennen und das Mischelement zu entnehmen, um es zu reinigen oder um den Mischblock für eine andere Mischung vorzubereiten. Alternativ dazu kann kein Mischelement vorgesehen werden oder ein Mischelement eines anderen Typs zum Einsatz kommen. Durch diese modulare Bauweise kann die Zusammensetzung der zu verarbeitenden Mischung und/oder Einbauten, wie Mischelemente, einfach und schnell geändert werden. Eine Reinigung des Mischelements kann in ausgebautem Zustand erfolgen, ohne dass eine länger andauernde Produktionsunterbrechung vonnöten ist. Das Übergangselement 37 gemäss Fig. 2 weist ein Aussengewinde auf, welches eine Kopplung an die Verarbeitungsvorrichtung ermöglicht.

Der Mischblock kann ein Temperierungsmittel aufweisen, was insbesondere bei Verarbeitung von Mischungen vorteilhaft ist, die bei höheren Temperaturen zu beschleunigter Reaktion und/oder zum beschleunigten Abbau von Inhibitoren neigen. Das Temperierungsmittel kann insbesondere als Kühlmantel ausgestaltet sein, oder kann nicht dargestellte Kühlkanäle im Inneren des Mischblocks aufweisen, durch welche ein Kühlmedium, insbesondere ein Kühlfluid, zirkuliert. Als besonders vorteilhaft hat sich die Verwendung einer Flüssigtemperierung erwiesen. Als Flüssigkeiten werden insbesondere Öl oder Wasser eingesetzt.

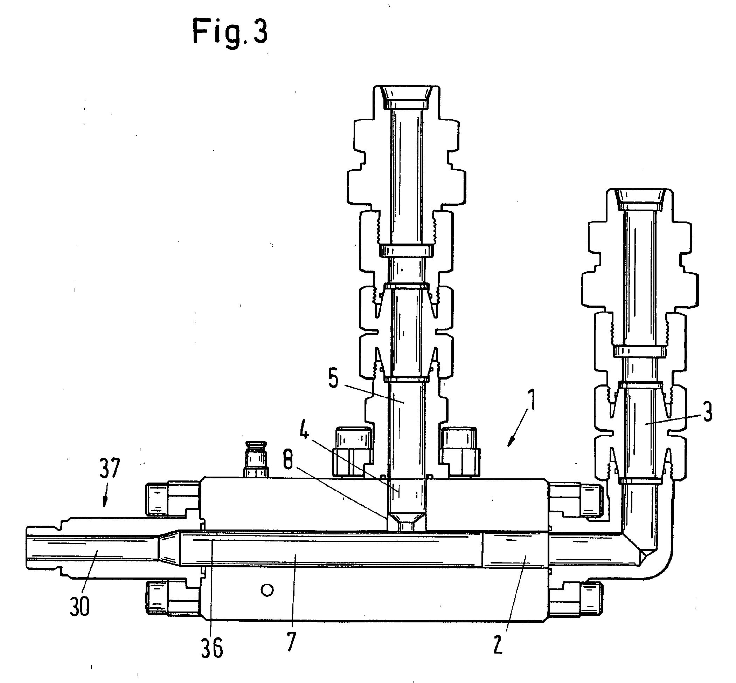

Fig. 3 zeigt einen Schnitt durch ein zweites Ausführungsbeispiel der erfindungsgemässen Vorrichtung, die sich darin von der Vorrichtung gemäss Fig. 2 unterscheidet, dass zumindest einer der ersten und zweiten Kanäle (2,4) eine Verengung 8 aufweist. Hierdurch wird vermieden, dass eine Komponente in die andere hineingedrückt wird. Dieses Problem tritt vornehmlich auf, wenn der durchgehende Kanal 2 ein Mischmittel 36 enthält. Dieses Mischmittel stellt insbesondere in der Ausführung als statisches Mischelement ein Hindernis für die Kanalströmung der ersten Komponente 3 im Kanal 2 dar. Ein Teil der durch Kanal 2 strömenden ersten Komponente 3 kann in Richtung des Kanals 4 umgelenkt werden, sodass dieser Kanal nicht mehr ausschliesslich die zweite Komponente 5, sondern noch Anteile der ersten Komponente 3 enthält. Alternativ dazu tritt dieser Effekt auf, wenn der Druck der ersten Komponente unmittelbar stromaufwärts der Mündung von Kanal 4 grösser als der Druck im Kanal 4 ist. Der Mischblock und das Mischmittel 36 sind Teil eines modularen Systems, welches einfach zu montieren, zu reinigen und zu gebrauchen ist. Die Bohrungsdurchmesser der ersten und zweiten Kanäle (2,4), sowie des Sammelkanals 7 können einfach an die verwendeten Komponenten bzw. der Mischung angepasst werden. Zum einen kann der Mischblock selbst ausgetauscht werden, zum anderen können die Kanäle mit Einsätzen, beispielsweise in der Form von Hülsen, versehen werden, mittels welchen der effektive Durchmesser des entsprechenden Kanals verringert wird. Um die Montagefreundlichkeit des Systems zu erhöhen, werden bevorzugt Befestigungsvorrichtungen für die Zuleitungen der Komponenten verwendet, die nachfolgend genauer beschrieben werden.

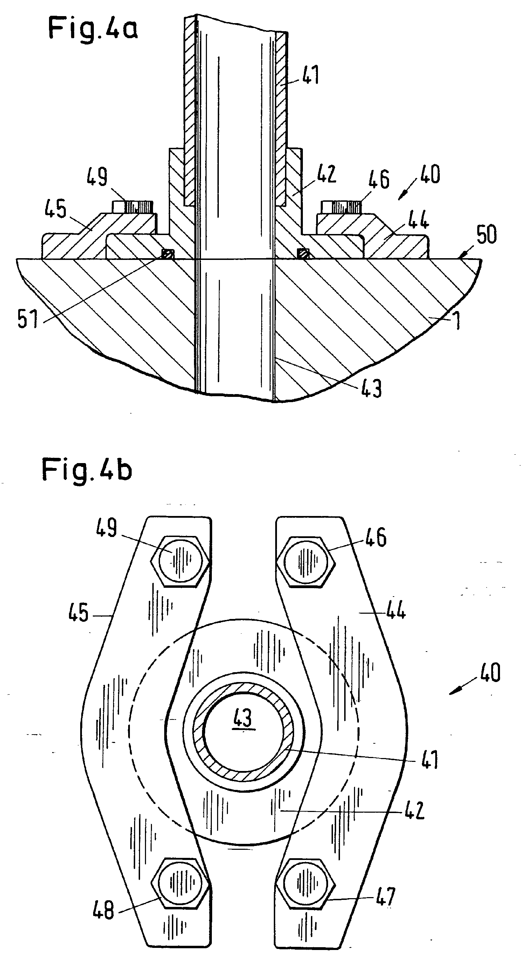

Fig. 4a und Fig. 4b zeigen ein erstes Ausführungsbeispiel für eine Befestigungsvorrichtung 40 für ein Zufuhrmittel 41 auf einer Oberfläche des Mischblocks im Bereich zumindest eines der ersten und zweiten Kanäle. Das Zufuhrmittel 41 kann als Schlauch ausgebildet sein, welcher der Zuleitung einer der Komponenten dient. Das Zufuhrmittel 41 endet in einem Flansch 42. Die Befestigungsvorrichtung 40 für das Zufuhrmittel ist auf der Oberfläche 50 des Mischblocks im Bereich der Eintrittsöffnung 43 zumindest eines der Kanäle angebracht. Die Befestigungsvorrichtung 40 umfasst zwei lösbare Bügelelemente (44,45), zwischen denen ein Teil des Flansches 42 des Zufuhrmittels einklemmbar ist. Die Bügelelemente (44,45) sind mittels Befestigungsmitteln (46,47,48,49) derart auf der Oberfläche 50 des Mischblocks 1 befestigbar, dass eine fluiddichte Verbindung zwischen Zufuhrmittel 41 und Kanal erzeugbar ist. Die Befestigungsmittel (46,47,48,49) sind nach einem bevorzugten Ausführungsbeispiel als je ein Paar Schrauben ausgebildet. Vorteilhafterweise sind zwei Bügelelemente (44,45) gegenüberliegend zueinander angeordnet, sodass eine allseitig gleiche Pressung des Flansches 42 auf die Oberfläche 50 erfolgt. Zwischen dem Flansch 42 und der Oberfläche 50 des Mischblocks 1 ist eine Dichtung 51 angeordnet.

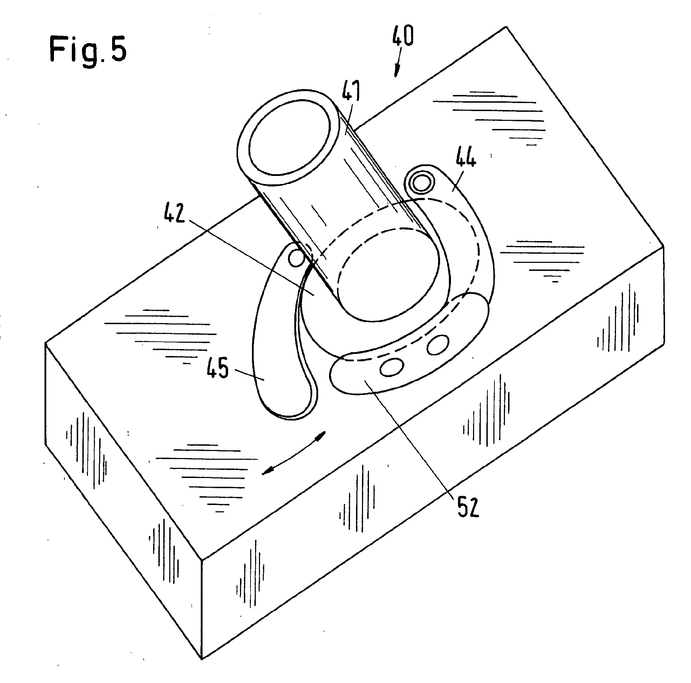

Nach einem weiteren Ausführungsbeispiel für eine Befestigungsvorrichtung 40 gemäss Fig. 5 kann zumindest ein Bügelelement (44,45) schwenkbar angeordnet sein. Das schwenkbare Bügelelement 45 wird dann nach Positionierung des Flansches 42 des Zufuhrmittels 41 in eine Schliessposition gebracht, wodurch ein Druck auf den Flansch 42 ausgeübt wird, sodass der Flansch in der Klemmposition blockiert bleibt. Hierzu wird das schwenkbare Bügelelement 45 mit einem Haltemittel 52 zum Eingriff gebracht.

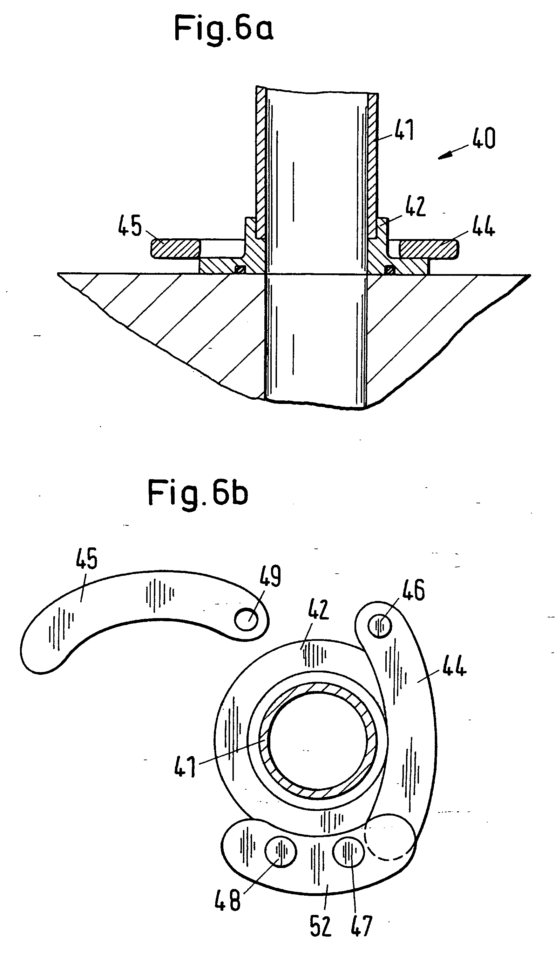

Fig. 6a zeigt einen Schnitt und Fig. 6b eine Draufsicht des zweiten Ausführungsbeispiels für eine Befestigungsvorrichtung 40 für ein Zufuhrmittel 41. Das Zufuhrmittel 41 ist an seinem Ende mit einem Flansch 42 ausgestattet. Der Flansch 42 wird auf einer Eintrittsöffnung 43 eines Kanals positioniert. Zur Positionierung können hier nicht dargestellte Positionierhilfsmittel vorgesehen sein, alternativ dazu ist es möglich, die endgültige Positionierung erst durch Schliessen des schwenkbaren Bügelelements 44 herbeizuführen. Vorteilhafterweise erfolgt in diesem Fall eine Berührung von Bügelelement 44 und Flansch 42, wie in Fig. 6b dargestellt. Die beiden Bügelelemente 44 und 45 sind auf Befestigungsmitteln (46, 49) drehbar gelagert. Bei einem solchen Befestigungsmittel kann es sich um einen Zylinderstift handeln. Das Bügelelement hat eine Bohrung, durch welche im zusammengebauten Zustand der Zylinderstift hindurchgeführt ist. Der Zylinderstift weist einen Kopf auf, sodass das Bügelelement verliersicher auf dem Zylinderstift gehalten wird. Das Bügelelement wird zum Schliessen der Verbindung unter ein in Fig. 6b dargestelltes Haltemittel 52 geschoben. Das Haltemittel kann eine Gleitbahn aufweisen, die relativ zur Deckfläche des Haltemittels 52 in einem Winkel geneigt ist, sodass der Pressdruck auf den Flansch kontinuierlich zunimmt. Ist der gewünschte Pressdruck erreicht, verrastet das Bügelelement mit dem Haltemittel. Zur Einstellung des Pressdrucks ist der Abstand des Haltemittels und/oder der Abstand des Bügelelements (44, 45) variabel einstellbar, indem beispielsweise zumindest eines der Befestigungsmittel (47,48) als Schraube ausgeführt ist. Bei Vorsehen von Schrauben für das Haltemittel kann auch das Haltemittel zumindest teilweise gelöst oder sogar vollkommen abgenommen werden, wenn die Verbindung zur Entnahme des Zufuhrmittels 41 samt seines Flansches 42 geöffnet werden soll. Nach diesem Ausführungsbeispiel ist es daher nicht erforderlich, eine einzige Schraube vollständig zu lösen. Daher kann einerseits das Zufuhrmittel 41 schnell ersetzt werden und andererseits können bei einem Austausch des Zufuhrmittels bei der Montage oder Demontage keine Kleinteile verloren gehen.

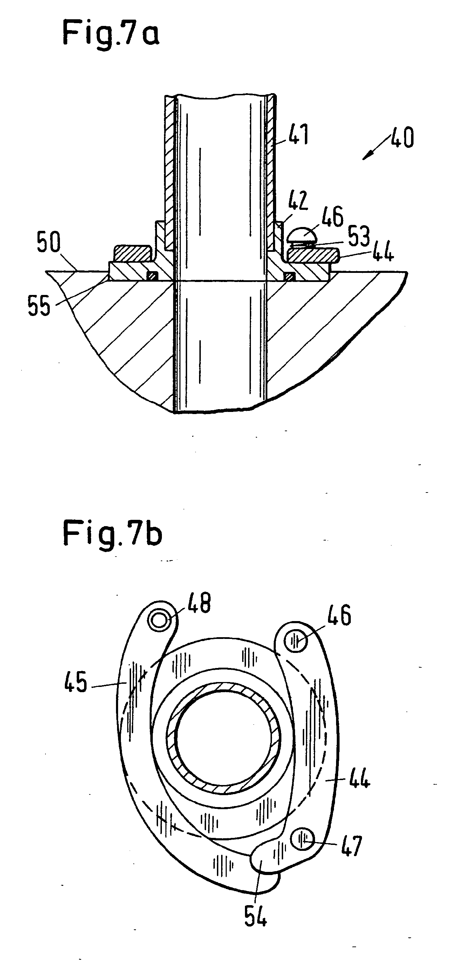

Fig. 7a und Fig. 7b zeigen ein drittes Ausführungsbeispiel für eine Befestigungsvorrichtung 40 für ein Zufuhrmittel 41, nach welchem zwei Bügelelemente 44 und 45 vorgesehen sind, wobei das Bügelelement 44 während der Demontage eines Zufuhrmittels in seiner Position verbleiben kann. Der Flansch 42 wird unter das Bügelelement 44 eingeschoben. Das Bügelelement wird von zwei Befestigungsmitteln (46, 47) gehalten. Zumindest eines der Befestigungsmittel kann als Zylinderstift mit Kopf ausgestaltet sein. Um einen definierten Pressdruck zu erzeugen, kann zwischen dem Kopf des Zylinderstifts 46 und dem Bügelelement 44 ein Federelement 53 angeordnet sein, welches bei Einführung des Flansches 42 vorgespannt wird. Das Bügelelement 44 steht unter der Vorspannung des Federelements 53, wenn sich der Flansch zwischen der Oberfläche 50 des Mischblocks 1 und dem Bügelelement 44 befindet. Ein zweites Bügelelement 45 ist vorgesehen, um einen über den Umfang des Flansches im wesentlichen gleichen Anpressdruck sicherzustellen. Das Bügelelement 45 ist schwenkbar um ein Befestigungsmittel 48 angeordnet. Das Bügelelement 45 kann mit einem Vorsprung 54 des Bügelelements 44 zum Eingriff gebracht werden. Auch nach diesem Ausführungsbeispiel ist das vollständige Lösen auch nur eines einzigen Befestigungsmittels nicht erforderlich. Zur Positionierung des Flansches 42 kann auch ein in Fig. 7a dargestellter umlaufender Absatz 55 in der Oberfläche 50 oder am Flansch (nicht dargestellt) vorgesehen sein.

Die in den Fig. 4 bis 7 dargestellten Befestigungsvorrichtungen erfordern somit nur eine äusserst geringe Anzahl an Montage- und Demontageschritten.

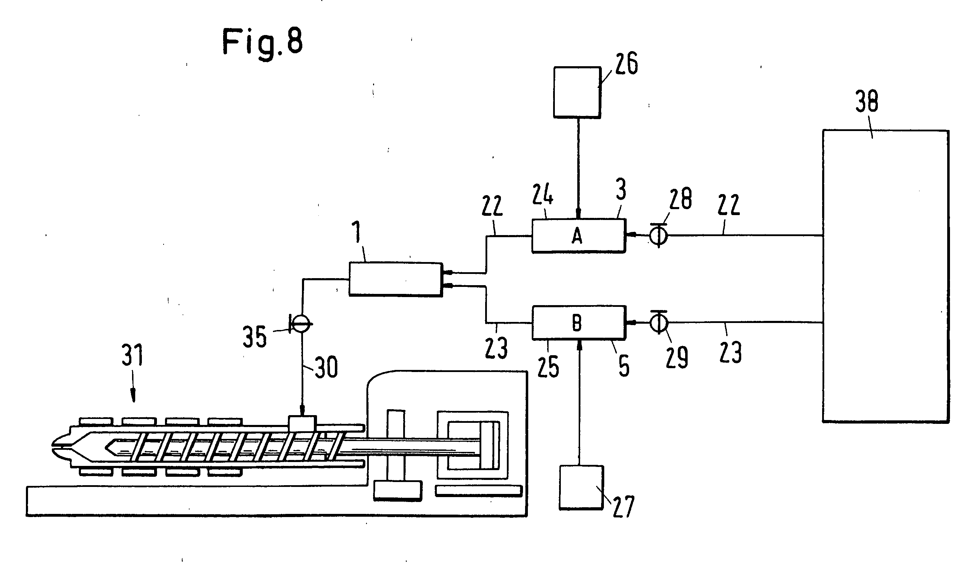

Die Vorrichtungen gemäss der vorhergehenden Ausführungsbeispiele können mit Absperrmitteln (28,29), die in Fig. 8 schematisch dargestellt sind, ausgerüstet werden. Derartige Absperrmittel können als passive Rückschlagventile, ähnlich den im Stand der Technik gezeigten Rückschlagventilen 16, 17 oder als Druckminderventile ausgestaltet sein, die stromaufwärts des Mischblocks 1 angeordnet sind.

Zur Verbesserung der Prozessüberwachung ist der Einsatz von Manometern oder Druckaufnehmern möglich.

Fig. 8 zeigt eine schematische Ansicht einer Anlage, in welcher die erfindungsgemässe Vorrichtung Verwendung findet. Die Anlage umfasst eine Dosiervorrichtung 38 für jede der zuzuführenden Komponenten. In der Fig. 8 ist eine erste Zuleitung 22 für eine erste Komponente 3 und eine zweite Zuleitung 23 für eine zweite Komponente 5 dargestellt. Die Anzahl der Komponenten und/oder Zuleitungen kann auch grösser als zwei sein. Die Zuleitungen 22 und 23 münden in einen Mischblock 1. In der ersten Zuleitung kann eine erste Injektionsvorrichtung 24 vorgesehen sein, mittels welcher der Komponente 2 ein Additiv beigemischt wird. Insbesondere handelt es sich bei einem derartigen Additiv um ein Treibmittel, wie beispielsweise Kohlendioxid. Das Additiv wird von einer Additivquelle 26 zugeführt, wobei für gasförmige Additive eine derartige Additivquelle als Druckbehälter, insbesondere als eine Druckgasflasche ausgebildet ist. Auch in der zweiten Zuleitung 23 kann eine zweite Injektionsvorrichtung 25 vorgesehen sein, die von einer zweiten Additivquelle 27 gespeist wird. Selbstverständlich können auch mehrere Additivquellen pro Injektionsvorrichtung vorgesehen sein oder Injektionsvorrichtungen können direkt an den Mischblock angeschlossen sein. Die Zufuhr der einzelnen Komponenten kann mittels Absperrmitteln (28,29) unterbunden werden, wobei die Absperrmittel insbesondere als Rückschlagventile ausgestaltet sind. Der Sammelkanal im Inneren des Mischblocks (nicht dargestellt) mündet in eine Sammelleitung 30, die zu einer Verarbeitungsvorrichtung 31 zur Herstellung von Artikeln aus der Mischung 6 führt. Die Verarbeitungsvorrichtung 31 kann insbesondere als Extruder oder Spritzgiessmaschine ausgeführt sein. Der Mischblock 1 wird insbesondere in einer Anlage zur Verarbeitung von Silikonkautschuk oder zur Verarbeitung von zumindest einer hochreaktiven Komponente eingesetzt. Hochreaktiv wird für die Anwendung auf Silikonkautschuk wie folgt definiert: Die Reaktionsfähigkeit von Silikonkautschuk wird üblicherweise über die t₉₀-Zeit charakterisiert. Diese t₉₀-Zeit bestimmt bei einer gegebenen Temperatur den Zeitpunkt, an dem ein Reaktionsumsatz von 90% erreicht ist. Bei 120°C beträgt dieser Wert für Silikonkautschuk üblicherweise 50 bis 60 Sekunden. Wird der Reaktionsumsatz von 90% somit beispielsweise bereits nach 45 Sekunden erreicht, das heisst 10% schneller, ist dieses Material bereits als hochreaktiv zu bezeichnen. Hochreaktive Materialien im Sinne der Anmeldung sind somit Silikonkautschuke deren Reaktionsumsatz gemäss der t₉₀-Zeit in einer um mindestens 10% verkürzten Zeitspanne, vorzugsweise in einer um 15% verkürzten Zeitspanne, besonders bevorzugt in einer um 20% verkürzten Zeitspanne erreicht wird.

Soll mit dem Mischblock insbesondere schäumbares Material verarbeitet werden, kann ein aktiv betätigtes Verschlussorgan 35 stromabwärts des Mischblocks vor dem Eintritt in die Verarbeitungsvorrichtung 31 vorgesehen werden. Mittels dieses aktiv betätigbaren Verschlussorgans 35, das insbesondere als Rückschlagventil ausgestattet ist, wird der Mischblock von der Verarbeitungsvorrichtung abgetrennt, wenn mit dem Mischblock schäumbare Komponenten verarbeitet werden.

## Patentansprüche

1. Mischblock (1) zur Erzeugung einer reaktionsfähigen fliessfähigen Mischung (6) der einen ersten Kanal (2) für eine erste Komponente (3) der Mischung (6) und einen zweiten Kanal (4) für eine zweite Komponente (5) der Mischung (6) enthält, sowie einen Sammelkanal (7) für die Mischung (6) umfasst, in welchen der erste Kanal (2) und der zweite Kanal (4) einmünden, wobei der Sammelkanal (7) eine Mittenachse (60) aufweist, entlang derer ein Mischmittel (36) angeordnet ist, wobei sich das Mischmitell (36), über einen Teil der Länge des Sammelkanals (7) erstreckt, wobei der zweite Kanal (4) an einer Stelle in den Sammelkanal (7) einmündet, die von dem Mischmittel (36) ausgefüllt ist, wobei das Mischmittel (36) als statischer Mischer ausgebildet ist, **dadurch gekennzeichnet, dass** der Mischer mindestens ein Mischelement enthält, welches aus sich kreuzenden Stegen aufgebaut ist, die einen Winkel mit der Mittenachse (60) des Sammelkanals (7) einschliessen, der kleiner als 90° ist, wobei zumindest einer der ersten und zweiten Kanäle (2,4) eine Verengung (8) aufweist.

2. Mischblock nach Anspruch 1, wobei die Stege des Mischelementes in mindestens zwei Gruppen angeordnet sind.

3. Mischblock nach Anspruch 2, wobei die Stege der einen Gruppe sich mit den Stegen der anderen Gruppe kreuzen.

4. Mischblock nach einem der vorhergehenden Ansprüche, wobei jeder Steg eine Stegbreite aufweist, wobei das Verhältnis der maximalen Stegbreite zum Durchmesser des Sammelkanals (7) 0,1 bis 0,167 beträgt.

5. Mischblock nach einem der vorhergehenden Ansprüche, wobei das Verhältnis des senkrechten Abstandes der Stege einer Gruppe zum Durchmesser des Sammelkanals (7) 0,2 bis 0,4 beträgt.

6. Mischblock nach einem der vorhergehenden Ansprüche, wobei das Verhältnis der Länge des Mischelements zum Durchmesser des Sammelkanals (7) 0,75 bis 1,5 beträgt.

7. Mischblock nach einem der vorhergehenden Ansprüche, wobei zur Vermeidung von Totzonen der Sammelkanal (7) einen im wesentlichen konstanten Querschnittsverlauf aufweist.

8. Mischblock nach Anspruch 7, wobei der Sammelkanal (7) kreisförmigen Querschnitt aufweist.

9. Mischblock nach einem der vorhergehenden Ansprüche, wobei die Kanäle (2,4) kreisförmigen Querschnitt haben.

10. Mischblock nach einem der vorhergehenden Ansprüche, wobei der Durchmesser des Sammelkanals (7) kleiner oder gleich dem Durchmesser jedes der Kanäle (2,4) ist.

11. Mischblock nach einem der vorhergehenden Ansprüche, wobei ein Temperiermittel vorgesehen ist.

12. Verwendung des Mischblocks nach einem der vorhergehenden Ansprüche zur Herstellung eines Formteils.

13. Verwendung des Mischblocks nach einem der vorhergehenden Ansprüche in einer Anlage zur Verarbeitung von Silikonkautschuk.

14. Verwendung des Mischblocks nach einem der vorhergehenden Ansprüche zur Verarbeitung einer Mischung.

## Claims

1. A mixing block (1) for the production of a reactive flowable mixture (6) which includes at least one first passage (2) for at least one first component (3) of the mixture (6) and a second passage (4) for a second component (5) of the mixture (6) as well as a collection passage (7) for the mixture (6) into which the first passage (2) and the second passage (4) open, wherein the collection passage (7) includes a central axis (60) and a mixing means (36) arranged along the central axis (60) and the mixing means (36) extends over a portion of the length of the collection passage (7), whereby the second passage (4) opens into the collection passage (7) at a location which is filled by the mixing means (36), wherein the mixing means (36) is configured as a static mixing element, **characterised in that** the static mixing element comprises bars crossing each other, said bars being arranged at an angle of less than 90° in relation to a central axis (60) of the collection passage (7) and wherein at least one of the first and second passages (2, 4) has a constriction (8).

2. Mixing block according to claim 1, wherein the bars of the static mixing element are arranged in at least two groups.

3. Mixing block according to claim 2, wherein the bars of one of the groups crosses with the bars of the other of the groups.

4. Mixing block in accordance with one of the preceding claims, wherein each bar has a width whereby the ratio of the maximal width of the bar to the diameter of the collection passage (7) is 0.1 to 0.167.

5. Mixing block in accordance with one of the preceding claims, whereby the ratio of the normal distance of the bars of one group to the diameter of the collection passage (7) is 0.2 to 0.4.

6. Mixing block in accordance with one of the preceding claims, wherein the ratio of the length of the mixing element to the diameter of the collection passage (7) is 0.75 to 1.5.

7. Mixing block in accordance with one of the preceding claims, wherein the collection passage (7) has a substantially constant cross-sectional extent to avoid dead zones.

8. Mixing block in accordance with claim 7, wherein the collection passage (7) has a circular cross-section.

9. Mixing block in accordance with any one of the preceding claims, wherein the passages (2, 4) have a circular cross-section.

10. Mixing block in accordance with any one of the preceding claims, wherein the diameter of the collection passage (7) is smaller than or equal to the diameter of each of the passages (2, 4).

11. Mixing block in accordance with any one of the preceding claims, which includes a heat exchanging means.

12. Use of the mixing block in accordance with any one of the preceding claims for the manufacture of a moulded part.

13. Use of the mixing block in accordance with any one of the preceding claims in a plant for the processing of silicon rubber.

14. Use of the mixing block in accordance with any one of the preceding claims for the processing of a mixture.

## Revendications

1. Bloc de mélange (1) destiné à la production d'un mélange pouvant s'écouler et réagir (6), qui comprend un premier canal (2) pour un premier composant (3) du mélange (6) et un deuxième canal (4) pour un deuxième composant (5) du mélange (6), ainsi qu'un canal de collecte (7) pour le mélange (6), dans lequel débouche le premier canal (2) et le deuxième canal (4), où le canal de collecte (7) présente un axe médian (60) le long duquel est disposé un moyen de mélange (36), où le moyen de mélange (36) s'étend sur une partie de la longueur du canal de collecte (7), où le deuxième canal (4) débouche à un emplacement dans le canal de collecte (7) qui est rempli par le moyen de mélange (36), où le moyen de mélange (36) est réalisé comme mélangeur statique, **caractérisé en ce que** le mélangeur contient au moins un élément de mélange qui est formé par des nervures qui se croisent, qui forment un angle avec l'axe médian (60) du canal de collecte (7) qui est plus petit que 90°, où au moins un des premier et deuxième canaux (2, 4) présente un retrécissement (8).

2. Bloc de mélange selon la revendication 1, où les nervures de l'élément de mélange sont disposées en au moins deux groupes.

3. Bloc de mélange selon la revendication 2, où les nervures d'un groupe se croisent avec les nervures de l'autre groupe.

4. Bloc de mélange selon l'une des revendications précédentes, où chaque nervure présente une largeur de nervure, où le rapport de la largeur de nervure maximale au diamètre du canal de collecte (7) est de 0,1 à 0,167.

5. Bloc de mélange selon l'une des revendications précédentes, où le rapport de l'écart vertical des nervures d'un groupe au diamètre du canal de collecte (7) est de 0,2 à 0,4.

6. Bloc de mélange selon l'une des revendications précédentes, où le rapport de la longueur de l'élément de mélange au diamètre du canal de collecte (7) est de 0,75 à 1,5.

7. Bloc de mélange selon l'une des revendications précédentes, où pour éviter des zones mortes, le canal de collecte (7) présente un tracé en section transversale sensiblement constant.

8. Bloc de mélange selon la revendication 7, où le canal de collecte (7) présente une section transversale circulaire.

9. Bloc de mélange selon l'une des revendications précédentes, où les canaux (2, 4) ont une section transversale circulaire.

10. Bloc de mélange selon l'une des revendications précédentes, où le diamètre du canal de collecte (7) est inférieur ou égal au diamètre de chacun des canaux (2, 4).

11. Bloc de mélange selon l'une des revendications précédentes, où un moyen de mise à température est prévu.

12. Utilisation du bloc de mélange selon l'une des revendications précédentes pour la fabrication d'une pièce moulée.

13. Utilisation du bloc de mélange selon l'une des revendications précédentes dans une installation de traitement de caoutchouc silicone.

14. Utilisation du bloc de mélange selon l'une des revendications précédentes pour le traitement d'un mélange.
